# EUROPÄISCHE PATENTSCHRIFT

(11) **EP 4 247 669 B1**
(45) Veröffentlichungstag und Bekanntmachung des Hinweises auf die Patenterteilung: **31.12.2025**
(21) Anmeldenummer: 21815406.0
(22) Anmeldetag: 15.11.2021
(51) Int. Cl.: B60R 13/04, B62D 25/02, B62D 35/00

(54) **AUSSENVERKLEIDUNG FÜR EINEN KRAFTWAGEN**
OUTER SKIN FOR A MOTOR VEHICLE
REVÊTEMENT EXTERNE POUR VÉHICULE AUTOMOBILE

(30) Priorität: 23.11.2020 DE 102020007140
(43) Veröffentlichungstag der Anmeldung: 27.09.2023
(73) Patentinhaber: Mercedes-Benz Group AG, 70372 Stuttgart (DE)
(72) Erfinder: SALKIC, Asmir, 89077 Ulm (DE)
(74) Vertreter: Novagraaf Group
(86) Internationale Anmeldenummer: PCT/EP2021/081611
(87) Internationale Veröffentlichungsnummer: WO 2022/106325

(56) Entgegenhaltungen:
- WO-A1-2019/174768
- DE-A1- 102019 108 418
- FR-A1- 2 983 451

## Beschreibung

Die Erfindung betrifft eine Außenverkleidung für einen Kraftwagen gemäß dem Oberbegriff des Anspruchs 1.

Auf der Außenseite von Kraftwagen kommen zunehmend einen Teil der Kraftwagenaußenhaut bildende Außenverkleidungsteile zum Einsatz, welche in ihrer Form veränderbar sind. So ist es beispielsweise wünschenswert, aus Gründen der Aerodynamik oder der Sicherheit entsprechende Außenverkleidungsteile formveränderbar zu gestalten.

Aus der DE 10 2012 018 284 A1 geht bereits eine derartige Außenverkleidung für einen Kraftwagen hervor, bei welcher ein Außenverkleidungsteil in Form eines Seitenschwellerverkleidungsteils ein formstabiles Teilelement und ein sich daran anschließendes weiteres Teilelement umfasst, welches als ein auf eine Wickelwelle aufgewickeltes Membranmaterial ausgebildet ist. Beim Verstellen des Außenverkleidungsteils aus einer ersten Stellung in eine weitere Stellung kann dabei die Verkleidungsfläche des Membranmaterials vergrößert werden, welches von der Wickelwelle abgewickelt beziehungsweise auf diese aufgewickelt wird.

Aus der DE 36 13 301 A1 ist ebenfalls bereits eine Außenverkleidung für einen Kraftwagen mit einem Außenverkleidungsteil in Form einer Seitenschwellerverkleidung bekannt, bei welcher mehrere formstabile Teilelemente im Bereich jeweiliger Sollbiegestellen beziehungsweise Filmscharniere miteinander verbunden sind. Hierdurch lässt sich das Außenverkleidungsteil aus einer schwellernahen in eine schwellerferne Stellung verlagern, um die Aerodynamik des Kraftwagens zu verbessern.

Aus der DE 10 2009 031 534 A1 ist ebenfalls eine Außenverkleidung für einen Kraftwagen mit einem Außenverkleidungsteil in Form eines Schwellerverkleidungselements als bekannt zu entnehmen, bei welchem wenigstens ein formstabiles Teilelement relativ zu einem weiteren formsteifen Teilelement des Außenverkleidungsteils in Fahrzeugquerrichtung nach außen beziehungsweise nach innen verlagert werden kann.

Aus der DE 10 2019 108 418 A1 geht ein verstellbarer Heckspoiler mit einem starren Substrat, das in einzelne Abschnitte unterteilt ist, die mit einer elastischen Membran überzogen sind, hervor. Die Anordnung ist so, dass zwei starre Teile des Substrats in der Lage sind sich voneinander weg zu bewegen, wenn man schwenkt, um die Form des Spoilers zu ändern.

Aus der FR 2 983 451 A1 geht eine Seitenschwellerverkleidung hervor, die eine entfaltbare aerodynamische Schürze bildet. Die Verkleidung besteht aus zwei starren Elementen, die durch ein drittes flexibles Element getrennt sind. Die Baugruppe ist im Zweikomponenten-Spritzgussverfahren hergestellt.

WO 2019/174768 A1 offenbart weiterhin ein Seitenschwellerverkleidungselement mit einem einziehbaren Teil, welches dazu dient, um den Ein- und Ausstieg der Fahrgäste zu erleichtern. Ein oberer Teil des einziehbaren Abschnitts weist eine flexible Membran auf, die den Spalt zwischen dem Hauptschweller und dem beweglichen Teil schließt, wenn sich der bewegliche Teil in einer ausgefahrenen Position befindet.

Schließlich sind weitere Textil-Bauweisen von Außenverkleidungen bekannt, bei welchen entsprechende Textilwerkstoffe als Außenverkleidungsteile eingesetzt und beispielsweise über eine Gitterstruktur gespannt werden. Derartige Textilien sind allerdings nicht ausreichend formstabil und verformen sich insbesondere bei höheren Fahrgeschwindigkeiten erheblich.

Aufgabe der vorliegenden Erfindung ist es, eine Außenverkleidung der eingangs genannten Art zu schaffen, dessen Außenverkleidungsteil besonders einfach aufgebaut ist und auch beim Verstellen seiner beiden Stellungen eine hohe Werteanmutung aufweist.

Diese Aufgabe wird erfindungsgemäß durch eine Außenverkleidung mit den Merkmalen des Anspruchs 1 gelöst. Vorteilhafte Ausgestaltungen mit zweckmäßigen Weiterbildungen der Erfindung sind Gegenstand der abhängigen Ansprüche.

Die erfindungsgemäße Außenverkleidung für einen Kraftwagen umfasst wenigstens ein Außenverkleidungsteil mit wenigstens einem formstabilen Teil und wenigstens einem sich an dieses anschließenden weiteren Teilelement. Zum Verstellen des Außenverkleidungsteils zwischen einer Stellung und einer weiteren Stellung unter Veränderung seiner Verkleidungsfläche ist erfindungsgemäß das weitere Teilelement aus einem elastischen Werkstoff ausgebildet, dessen Verkleidungsfläche unter Kraftbeaufschlagung reversibel beziehungsweise dehnbar veränderbar ist. Ferner ist vorgesehen, dass sich auf beiden Seiten eines mittleren, formstabilen Teilelements jeweils ein elastisches weiteres Teilelement anschließt, wodurch das formstabile Teilelement auf besonders einfache Weise in einer Seitenschwellerverkleidung in Fahrzeugquerrichtung nach außen beziehungsweise nach innen verfahren werden kann.

Im Unterschied zum vorstehend zitierten Stand der Technik, insbesondere gemäß DE 10 2012 018 284 A1, bei welchem die Verkleidungsfläche des weiteren Teilelements durch Abwickeln eines Bahnmaterials von einer Wickelwelle vergrößert beziehungsweise durch Aufwickeln auf diese Wickelwelle verkleinert wird, ist es erfindungsgemäß vorgesehen, die Vergrößerung beziehungsweise Verkleinerung der jeweiligen Verkleidungsfläche des weiteren Teilelements des Außenverkleidungsteils zu erreichen, indem dieses weitere Teilelement aus einem entsprechend elastischen Werkstoff gebildet ist, welcher durch entsprechende Kraftbeaufschlagung reversibel dehnbar, also flächenmäßig vergrößerbar beziehungsweise verkleinerbar ist.

Im Ergebnis lässt sich hierdurch ein äußerst einfaches Außenverkleidungsteil aus formstabilen Teilelementen und elastischen Teilelemente schaffen, welche beispielsweise und insbesondere einstückig und fugenlos miteinander verbunden sind beziehungsweise ineinander übergehen. Somit ist keine aufwendige Konstruktion des Außenverkleidungsteils erforderlich, und andererseits können die beiden Teilelemente, das jeweilige formstabile Teilelement und das jeweilige elastische Teilelement, fugenlos beziehungsweise einteilig ineinander übergehen beziehungsweise aneinander angrenzen. Dies ist nicht nur aus ästhetischen Gründen sehr vorteilhaft, sondern verhindert darüber hinaus eine erhebliche Schmutzansammlung im Bereich der Außenverkleidung des Kraftwagens.

Wie bereits vorstehend erläutert, hat es sich als besonders vorteilhaft gezeigt, wenn das Außenverkleidungsteil wenigstens ein formstabiles und wenigstens ein elastisches Teilelement umfasst, welche einstückig und fugenlos miteinander verbunden sind.

Hierdurch lässt sich eine besonders einfache Bauweise des Außenverkleidungsteils realisieren und überdies eine besonders günstige Verbindung beziehungsweise ein günstiger Übergang zwischen dem formstabilen und dem elastischen Teilelement.

In diesem Zusammenhang hat es sich als weiter vorteilhaft gezeigt, wenn das formstabile Teilelement und das weitere, elastische Teilelement des Außenverkleidungsteils in einem Zweikomponenten-Spritzgussverfahren hergestellt sind. Ein derartiges Verfahren kann besonders prozesssicher durchgeführt werden und ermöglicht eine einfache Herstellung des Außenverkleidungsteils aus den entsprechend erforderlichen Werkstoffen.

Eine weitere vorteilhafte Ausführungsform der Erfindung sieht vor, dass die Außenverkleidung ein weiteres, formstabiles Verkleidungselement aufweist, welches in mindestens zwei Stellungen verstellbar ist und mittels welchem das Außenverkleidungsteil zwischen der einen Stellung und der weiteren Stellung verstellbar ist. Das formstabile weitere Verkleidungselement kann dabei beispielsweise ein seitlich im Bereich einer Seitenschwellerverkleidung angeordnetes Windleitelement oder dergleichen sein, welches aus einer eingefahrenen Stellung, in welcher dieses das Außenverkleidungsteil in die eine Stellung, beispielsweise eine eingefahrene Stellung verlagert, in eine ausgefahrene Stellung verlagerbar sein kann, sodass das Außenverkleidungsteil damit einhergehend in die weitere Stellung verlagert wird, in welcher dieses die Außenverkleidung des Fahrzeugs, insbesondere im Bereich der Seitenschwellerverkleidung, bildet. Oder mit anderen Worten gesagt, das weitere, formstabile Verkleidungselement dient als Kraftbeaufschlagungselement, mittels welchem das Außenverkleidungsteil zwischen seinen wenigstens zwei Stellungen verstellt wird.

In weiterer vorteilhafter Ausgestaltung der Erfindung bildet das Außenverkleidungsteil in seiner einen Stellung die Außenverkleidung des Kraftwagens und in seiner weiteren Stellung eine Vertiefung aus, in welcher das weitere, formstabile Verkleidungselement in seiner einen Stellung aufgenommen ist, in welcher dieses die Außenverkleidung bildet. Demzufolge liegt das weitere, formstabile Verkleidungselement in seiner einen Stellung unter Ausbildung der Vertiefung in dem Außenverkleidungsteil an, wobei sich das Außenverkleidungsteil beispielsweise infolge der Elastizität wenigstens eines elastischen Teilelements bei einer Verlagerung des Weiteren, formstabilen Verkleidungselements in die ausgefahrene Stellung selbsttätig beziehungsweise automatisch in die weitere Stellung verlagert. Gegebenenfalls wäre hier natürlich auch eine Unterstützung mittels einer Aktorik oder dergleichen denkbar, mittels welcher das Außenverkleidungsteil zwischen den beiden Stellungen verlagerbar ist.

Eine weitere vorteilhafte Ausführungsform der Erfindung sieht vor, dass auf der der Außenseite abgewandten Innenseite des Außenverkleidungsteils ein Stellelement vorgesehen ist, mittels welchem das formstabile Verkleidungselement zwischen den wenigstens Stellungen verlagerbar ist. Gemäß dieser Ausführungsform wird somit mittels des Stellelements die entsprechende Kraft erzeugt, mittels welcher das wenigstens eine elastische Teilelement beaufschlagbar ist, so dass sich dessen Verkleidungsfläche beziehungsweise Grundfläche entsprechend verändert.

Eine weitere vorteilhafte Ausführungsform der Erfindung sieht vor, dass die Außenverkleidung als Schwellerlängsverkleidung eines Seitenschwellers des Kraftwagens ausgebildet ist. Gerade in diesem Bereich des Kraftwagens ist eine aerodynamische Anpassung der Außenverkleidung besonders sinnvoll, da somit Strömungen, die sich entlang der Seitenschwellerverkleidung bewegen, entsprechend abgelöst werden können, um hierdurch den aerodynamischen Widerstand zu verringern.

Weitere Vorteile und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:

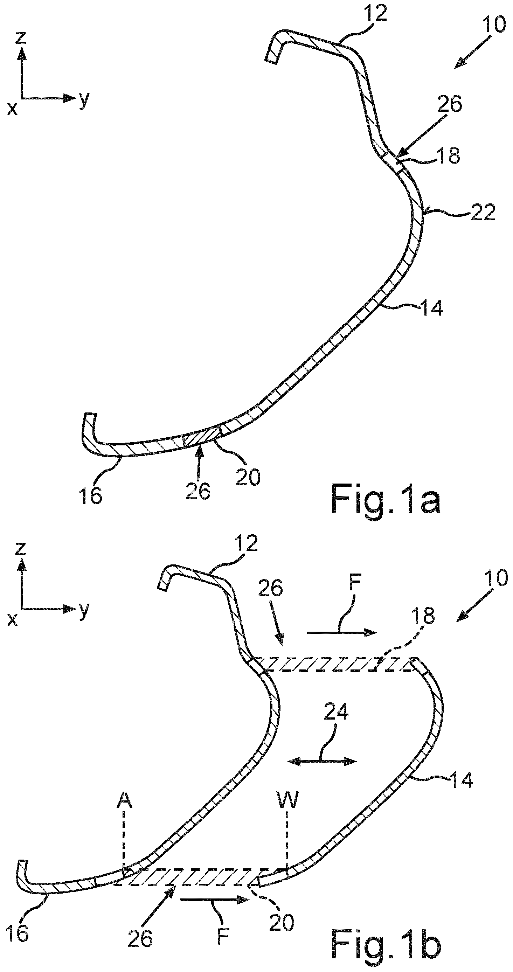

- Fig. 1a, 1b: jeweils eine schematische Schnittansicht durch ein Außenverkleidungsteil einer Außenverkleidung für einen Kraftwagen in Form einer Seitenschwellerverkleidung entlang einer in Fahrzeugquerrichtung beziehungsweise in Fahrzeughochrichtung verlaufenden Schnittebene, wobei Fig. 1a ein zentrales, formstabiles Teilelement des Außenverkleidungsteils zeigt, welches über wenigstens zwei aus einem elastischen Werkstoff gebildete weitere Teilelemente mit jeweiligen, endseitig des Außenverkleidungsteils vorgesehenen weiteren, formstabilen Teilelementen verbunden ist, wobei in Fig. 1a das formstabile Teilelement in einer eingefahrenen Stellung des Außenverkleidungsteils und in Fig. 1b in einer ausgefahrenen Stellung unter Veränderung der Verkleidungsfläche angeordnet ist;

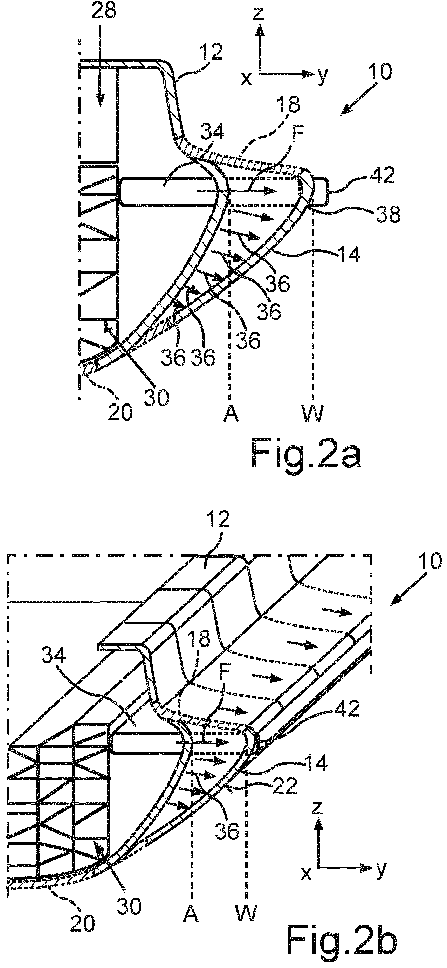

- Fig. 2a, 2b: jeweilige perspektivische Schnittansichten auf eine Außenverkleidung für einen Kraftwagen in Form einer Seitenschwellerverkleidung gemäß einer weiteren Ausführungsform, wobei das Außenverkleidungsteil analog zur Ausführungsform gemäß den Fig. 1a, 1b wiederum ein an einteiligen, elastischen Teilelementen angeordnetes, zentrales und formstabiles Teilelement aufweist, welches mittels eines schematisch angedeuteten Stellelements zwischen einer eingefahrenen und einer ausgefahrenen Stellung des Außenverkleidungsteils verstellbar ist;

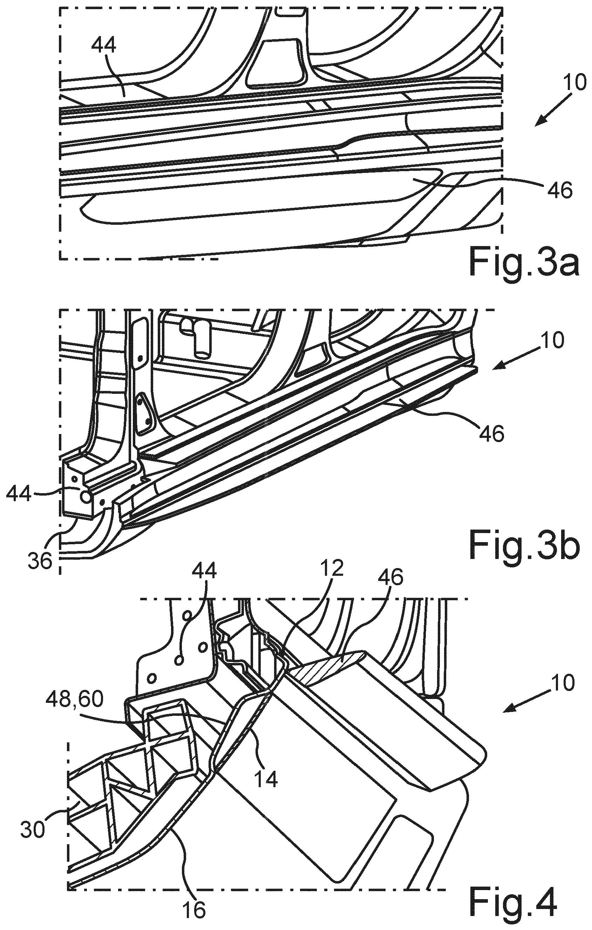

- Fig. 3a, 3b: jeweilige ausschnittsweise Perspektivansichten auf eine weitere Ausführungsform einer Außenverkleidung für einen Kraftwagen in Form einer Seitenschwellerverkleidung mit einem weiteren, formstabilen Verkleidungselement aus einer in Fig. 3a gezeigten eingeklappten Stellung in eine in Fig. 3b gezeigte ausgeklappte Stellung verlagerbar ist;
- Fig. 4: eine ausschnittsweise und perspektivische Schnittansicht auf die Außenverkleidung in Form der Seitenschwellerverkleidung gemäß den Fig. 3a und 3b, wobei das formstabile Verkleidungselement in seiner ausgefahrenen Stellung erkennbar ist; und in den

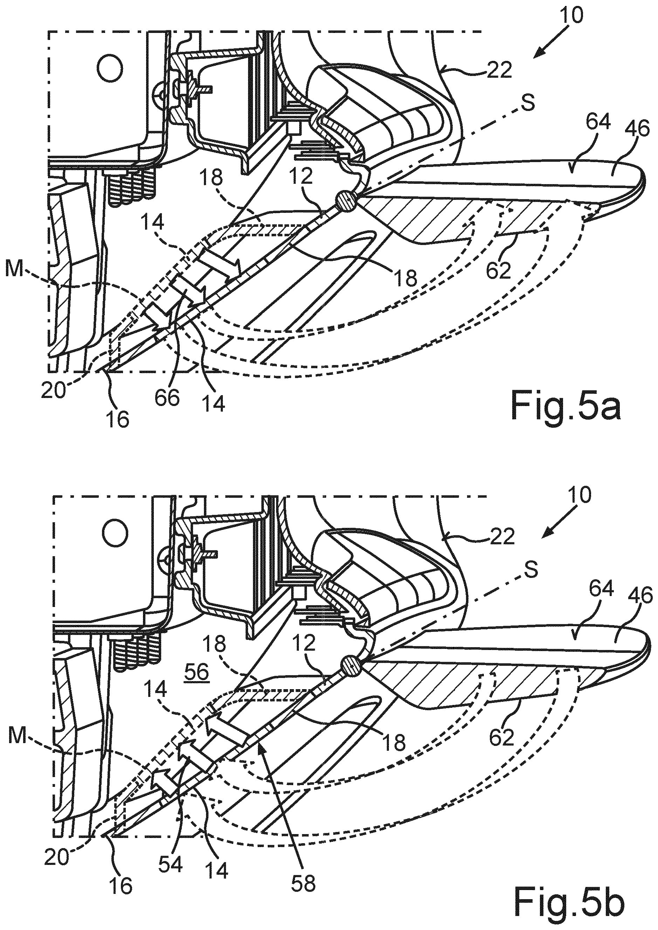

- Fig. 5a, 5b: jeweilige perspektivische Schnittansichten durch die Außenverkleidungen in Form der Seitenschwellerverkleidung gemäß den Fig. 3a bis 4 entlang einer in Fahrzeugquerrichtung beziehungsweise in Fahrzeughochrichtung verlaufenden Schnittebene, wobei verdeutlicht ist, dass das Außenverkleidungsteil in seiner einen Stellung, in welcher das ausklappbare Verkleidungselement sich in seiner ausgeklappten Stellung befindet, die Außenverkleidung des Kraftwagens in diesem Bereich bildet und in seiner weiteren Stellung eine Vertiefung ausbildet, in welcher das weitere, formstabile Verkleidungselement in seiner eingeklappten aufgenommen ist, in welcher dieses die Außenverkleidung bildet.

In den Fig. 1a und 1b ist jeweils in einer schematischen Schnittansicht entlang einer in Fahrzeughochrichtung (x-Richtung) beziehungsweise in Fahrzeugquerrichtung (y-Richtung) verlaufenden Schnittebene eine Außenverkleidung für einen Kraftwagen in Form einer Seitenschwellerverkleidung beziehungsweise Türschwellerverkleidung erkennbar. Von dieser Seitenschwellerverkleidung ist im vorliegenden Fall ein Außenverkleidungsteil 10 im Schnitt dargestellt, welches den Seitenschweller nach außen und unten hin verkleidet.

Das Außenverkleidungsteil 10 umfasst hierbei drei formstabile Teilelemente 12, 14, 16, zwischen welchen zwei weitere Teilelemente 18, 20 aus einem im Weiteren noch näher erläuterten, elastischen Werkstoff angeordnet sind. Jedes dieser Teilelemente 12, 14, 16, 18, 20 erstreckt sich vorliegend mit zumindest im Wesentlichen gleichbleibendem Querschnitt in Fahrzeuglängsrichtung (x-Richtung) des Seitenschwellers.

Die jeweiligen formstabilen Teilelemente 12, 14, 16 und die elastischen Teilelemente 18, 20 sind im vorliegenden Fall einstückig miteinander verbunden beziehungsweise das Außenverkleidungsteil 10 ist vorliegend einstückig ausgebildet. Dies erfolgt im vorliegenden Ausführungsbeispiel durch Herstellung des Außenverkleidungsteils 10 in einem sogenannten Zweikomponenten-Spritzgussverfahren. Insbesondere wird das Außenverkleidungsteil vorliegend in einem Mehrrohstoff-Spritzgussverfahren hergestellt, bei welchem die Teilelemente 12, 14, 16 aus einem formstabilen, nicht reversibel-elastischen Kunststoff und die Teilelemente 18, 20 aus einem reversibel-elastischen Kunststoff hergestellt sind. Das gesamte Außenverkleidungsteil 10 ist dabei zumindest außenseitig fugenlos hergestellt und weist insbesondere in der in Fig. 1a erkennbaren Ausgangsstellung eine die Außenhaut des Kraftwagens mit-bildende Außenseite 22 auf, welche ununterbrochen und durchgängig ausgebildet ist, also nicht durch entsprechende Fugen unterbrochen ist.

Aus der in Fig. 1a erkennbaren Ausgangsstellung ist das Außenverkleidungsteil 10 in Form der Seitenschwellerverkleidung in die in Fig. 1b gezeigte, weitere Stellung verstellbar. Insbesondere ist hierzu das mittlere formstabile Teilelement 14, welches unter Vermittlung der jeweiligen elastischen Teilelemente 18, 20 mit den jeweils äußeren, formstabilen Teilelementen 12 und 16 verbunden ist, aus der in Fig. 1a erkennbaren Ausgangsstellung A in die in Fig. 1b dargestellte weitere Stellung W verstellbar beziehungsweise verlagerbar. Dies kann beispielsweise durch mehrere Aktoren, einen andersartigen Verstellmechanismus oder auch auf hydraulischem oder pneumatischem Wege erfolgen. Die Verlagerung beziehungsweise Verstellung des formstabilen Teilelements 14 erfolgt dabei - wie symbolisch durch einen Pfeil 24 angedeutet - hier zumindest im Wesentlichen horizontal und in Fahrzeugquerrichtung (y-Richtung).

Beim Verstellen des formstabilen Teilelements 14 aus der in Fig. 1a gezeigten Ausgangsstellung A in die in Fig. 1b gezeigte weitere Stellung W werden die beiden elastischen Teilelemente 18, 20, welche einerseits am formstabilen Teilelement 14 und andererseits am jeweils endseitigen formstabilen Teilelement 12, 16 angeordnet beziehungsweise verbunden sind, mit einer jeweiligen Kraft F beaufschlagt, welche durch den jeweiligen Verstellmechanismus (Aktoren, sonstige Verstellmechanismen, pneumatische oder hydraulische Verstelleinrichtungen) erzeugt wird, indem das entsprechende formstabile Teilelement 14 - hier im Wesentlichen linear - verlagert wird. Hierdurch werden die beiden elastischen Teilelemente 18, 20 entsprechend verlängert und somit deren Verkleidungsfläche 26 auf der Außenseite 22 des Außenverkleidungsteils 10 entsprechend maßgeblich vergrößert. Während demzufolge die jeweiligen Verkleidungsflächen 26 der elastischen Teilelemente 18, 20 in Fig. 1a relativ klein beziehungsweise schmal ausgebildet sind, sind diese in Fig. 1b erheblich beziehungsweise um ein Vielfaches größer. Die Vergrößerung der Teilelemente 18, 20 ist durch die reversible Elastizität von deren Werkstoff möglich. Mit anderen Worten gesagt, durch das Ausfahren des formstabilen Teilelements 14 werden die beiden elastischen Teilelemente 18, 20 entsprechend gedehnt. Diese Dehnung, Deformation, Formänderung und Adaption der elastischen Teilelemente 18, 20 ist reversibel und beliebig oft wiederholbar. Somit werden vorliegend eine fugenlose Deformation oder dergleichen sowie eine Formänderung des Außenverkleidungsteils 10 beziehungsweise der Längsträgerverkleidung ermöglicht. Vorzugsweise sind die elastischen Teilelemente 18, 20 dabei aus einem elastischen Kunststoff gebildet, welcher unabhängig von seiner Dehnung beziehungsweise von der Kraftbeaufschlagung mittels der Kraft F im Wesentlichen seine Farbe beibehält beziehungsweise keine Farbänderung vornimmt. Insbesondere ein schwarzer Kunststoff eignet sich hierfür besonders gut. Natürlich können auch Kunststoffe in Fahrzeugfarbe für die Teilelemente 18, 20 vorgesehen sein.

Die Verstellung des Außenverkleidungsteils 10 aus der in Fig. 1a gezeigten Ausgangsstellung A in die in Fig. 1b gezeigte weitere Stellung W dient insbesondere der Verbesserung der Aerodynamik im Bereich der Seitenschweller, so dass beispielsweise hinter den Vorderrädern entstehende Luftströmungen auf verbesserte Weise von der Außenhaut des Kraftwagens, zu welcher die jeweiligen Außenseiten 22 der Außenverkleidungsteile 10 gehören, abgelöst werden können. Hierdurch verändert sich beispielsweise der Luftwiderstand des Fahrzeugs, wodurch sich eine energieeffizientere Fortbewegung realisieren lässt. Gleichzeitig können im Stillstand des Kraftwagens ein verbesserter Einstieg in das Fahrzeug ermöglicht werden beziehungsweise ein verbessertes Design erhalten bleiben.

Weiterhin ist Fig. 1b erkennbar, dass die Formstabilität der Teilelemente 14 bei der Verlagerung zwischen der Ausgangsstellung in die weitere Stellung W unverändert bleibt.

In den Fig. 2a und 2b ist eine weitere Außenverkleidung dargestellt. Erkennbar ist hierbei in einer schematischen vorderseitigen Schnittansicht beziehungsweise einer perspektivisch und schematischen Schnittansicht eine weitere Außenverkleidung in Form einer Seitenschwellerverkleidung, welche insbesondere wiederum ein Außenverkleidungsteil 10 umfasst. In Fahrzeugquerrichtung (y-Richtung) hinter beziehungsweise innenseitig von diesem angeordnet, ist in Fig. 2a ein rohbauseitiges Schwellerelement 28 erkennbar, welches sich in Fahrzeuglängsrichtung (x-Richtung) und etwa horizontal erstreckt. Unterseitig dieses rohbauseitigen Schwellerelements 28 ist ein Energieabsorptionselement angeordnet, welches in Fahrzeugquerrichtung (y-Richtung) außenseitig eines Energiespeichers 32 in Form einer Hochvolt-Batterie angeordnet ist. Das Außenverkleidungsteil 10 ist vorliegend zumindest im Wesentlichen analog zur Ausführungsform gemäß den Fig. 1a und 1b ausgebildet. Demzufolge umfasst auch vorliegend das Außenverkleidungsteil 10 drei formstabile Teilelemente 12, 14, 16, zwischen welchen jeweils ein elastisches Teilelement 18, 20 angeordnet ist. Auch hier ist der jeweilige Querschnitt der Teilelemente 12 bis 20 über den Längenverlauf des Außenverkleidungsteils 10 in Fahrzeuglängsrichtung (x-Richtung) zumindest über einen erheblichen Längenbereich gleichbleibend. Auch im vorliegenden Ausführungsbeispiel sind die formstabilen Teilelemente 12, 14, 16 beispielsweise aus einem Hartkunststoff, beispielsweise einem PP oder PA ausgebildet und in einem Zweikomponenten-Spritzgussverfahren untereinander unter Vermittlung der jeweiligen elastischen Teilelemente 18, 20, welche beispielsweise aus einem Elastomerwerkstoff oder dergleichen hergestellt sein können, einteilig und fugenlos verbunden.

Zwischen dem Energieabsorptionselement 30 und dem mittleren formstabilen Teilelement 14 des Außenverkleidungsteils 10 ist vorliegend ein Kern 34 angeordnet, welcher sich einerseits an dem Energieabsorptionselement 30 und andererseits dem oberen Rand des mittleren formstabilen Teilelements 14 an dessen Innenseite abstützt. Der Kern 34 kann dabei beispielsweise durch ein Medium, insbesondere Luft, in Fahrzeugquerrichtung (y-Richtung) ausfahrbar beziehungsweise vergrößerbar ausgebildet sein, wodurch das mittlere Teilelement 14 aus der jeweiligen, in Fig. 2A und 2B dargestellten Ausgangsstellung A in die jeweilige, weitere Stellung W in Fahrzeugquerrichtung (y-Richtung) nach außen verlagerbar ist. Die Verlagerungsbewegung aus der Ausgangsstellung in die weitere Stellung W des formstabilen Teilelements 14 ist hierbei durch jeweilige Pfeile 36 angedeutet. Insbesondere erkennbar ist hierbei, dass das obere elastische Teilelement 18 in seinem oberen Bereich gemäß den längeren Pfeilen 36 in Fahrzeugquerrichtung (y-Richtung) weiter nach außen hin verlagert wird als in einem unteren Bereich. Mit anderen Worten gesagt: Das obere elastische Teilelement 18 wird vorliegend beim Verlagern des formstabilen Teilelements 14 aus der Ausgangsstellung A in die weitere Stellung W weiter in Fahrzeugquerrichtung (y-Richtung) nach außen gedehnt als das untere elastische Teilelement 20. Im vorliegenden Fall ist es jedoch so, dass durch die Kraftbeaufschlagung mittels des Kerns 14 unter Vermittlung des mittleren, formstabilen Teilelements 14 sowohl das elastische Teilelement 18 als auch das untere elastische Teilelement 20 unter Veränderung beziehungsweise vorliegend Vergrößerung ihrer jeweiligen Verkleidungsfläche 26 gedehnt werden. Umgekehrt werden die elastischen Teilelemente 18, 20 bei der Rückverlagerung des mittleren, formstabilen Teilelements 14 aus der weiteren Stellung W in die Ausgangsstellung A in ihrer jeweiligen Verkleidungsfläche 26 verkleinert. Aufgrund der reversiblen beziehungsweise elastischen Nachgiebigkeit der Teilelemente 18, 20 kann die Verlagerung beziehungsweise Veränderung des Außenverkleidungsteils 10 beliebig oft wiederholt werden. Das formstabile Teilelement 14 sowie die Teilelemente 12 und 16 bleiben dabei in ihrer Form zumindest weitestgehend unverändert. Zudem verbleiben das Teilelement 12 und das formstabile Teilelement 16 auch während der Verlagerung des mittleren formstabilen Teilelements 14 an Ort und Stelle.

Es ist klar, dass anstelle des Kerns 34 wiederum ein anderer Verlagerungsmechanismus genutzt werden kann, um das stabile Teilelement beziehungsweise das Außenverkleidungsteil 10 zwischen seinen beiden Stellungen A, W beziehungsweise Formen zu verändern beziehungsweise zu verstellen.

Bei diesem zweiten Ausführungsbeispiel ist auf der Außenseite 22 des Außenverkleidungsteils 10 im Bereich beziehungsweise auf Höhe des Stellelements beziehungsweise Kerns 34 ein Zierelement 42 in Form eines Zierstabs angeordnet, welcher beim Verstellen des Kerns beziehungsweise Stellelements 34 einhergehend mit dem oberen Bereich 38 des formstabilen Teilelements 14 zwischen der Ausgangsstellung A und der weiteren Stellung W mitverlagert wird. Durch dieses Zierelement 42 wird das elastische Teilelement 18 in der Ausgangsstellung A zumindest teilweise kaschiert. Das Zierelement 42 ist dabei insbesondere als verchromte oder dergleichen beschichtete Zierleiste ausgebildet. Die Gestaltung der elastischen Teilelemente 18, 20 kann analog zu der im Zusammenhang mit dem Ausführungsbeispiel gemäß den Fig. 1a und 1b beschriebenen Ausführungsform sein.

In den Fig. 3a und 3b ist jeweils in einer ausschnittsweisen Perspektivansicht eine Kraftwagenkarosserie im Bereich eines entsprechenden Seitenschwellers 44 auf der - in Vorwärtsfahrtrichtung betrachtet - linken Fahrzeugseite dargestellt. Dem Seitenschweller 44 ist hierbei eine Außenverkleidung in Form einer Seitenschwellerverkleidung zugeordnet, welche - analog zu den vorhergehenden Ausführungsformen - im Wesentlichen ein Außenverkleidungsteil 10 umfasst, welches im Weiteren in Zusammenschau mit den Fig. 4 bis 5b noch näher erläutert werden wird. Neben diesem Außenverkleidungsteil 10 umfasst die Außenverkleidung ein weiteres, formstabiles Verkleidungselement 46 nach Art eines Flügels, einer Leiste oder dergleichen, welches aus einer ersten, in Fig. 3a dargestellten Stellung, in welcher das weitere Verkleidungselement 46 einen Teil der Außenverkleidung bildet, in die in Fig. 3b dargestellte zweite Stellung verlagerbar ist, in welcher das Außenverkleidungsteil 10 zumindest im Wesentlichen alleinig die Außenverkleidung des Seitenschwellers 44 bildet.

Fig. 4 zeigt in einer gegenüber den Fig. 3a und 3b vergrößerten perspektivischen Schnittansicht nochmals das flügelartige, weitere Verkleidungselement 46 in seiner zweiten Stellung, welches mit seiner Oberseite 48 beispielsweise etwa horizontal in Fahrzeugquerrichtung (y-Richtung) absteht.

In Zusammenschau der Fig. 3b und 4 wird zudem deutlich, dass unterseitig des Seitenschwellers 44, welcher seinerseits zur rohbauseitigen Seitenwand der Karosserie gehört, wiederum ein Energieabsorptionselement 30 angeordnet ist, wie dies bereits im Zusammenhang mit der Ausführungsform gemäß den Fig. 2a und 2b beschrieben worden ist.

Im Weiteren soll nun insbesondere unter Bezugnahme auf die Fig. 5a und 5b die konkrete Ausgestaltung der Außenverkleidung gemäß dieser dritten Ausführungsform erläutert werden. Die Fig. 5a und 5b zeigen dabei jeweils in einer leicht perspektivischen Schnittansicht entlang einer in Fahrzeughochrichtung (z-Richtung) beziehungsweise in Fahrzeugquerrichtung (y-Richtung) verlaufenden Schnittebene die Außenverkleidung. Erkennbar ist dabei insbesondere das Außenverkleidungsteil 10, welches sich im vorliegenden Fall - wie dies insbesondere aus den Fig. 3a bis 4 erkennbar ist - außenseitig und unterseitig des Seitenschwellers 44 erstreckt. Im vorliegenden Fall umfasst das Außenverkleidungsteil wiederum jeweilige formstabile Teilelemente 12, 14, 16, zwischen welchen jeweilige elastische Teilelemente 18, 20 angeordnet sind. Die jeweiligen Teilelemente 12 bis 20 erstrecken sich dabei wiederum über einen entsprechenden Längenbereich des Außenverkleidungsteils 10 in Fahrzeuglängsrichtung (x-Richtung) mit zumindest im Wesentlichen gleichbleibendem Querschnitt. Der angesprochene Längenbereich entspricht dabei im Wesentlichen der Länge des Weiteren formstabilen Verkleidungselements 46.

Wie des Weiteren aus den Fig. 5a und 5b erkennbar ist, ist das flügelartige formstabile Verkleidungselement 46 um eine Schwenkachse S verschwenkbar beziehungsweise verlagerbar, und zwar aus der ersten, verkleidungsnahen Stellung, wie diese auch in Fig. 3a gezeigt ist, in die in den Fig. 3b und 4 gezeigte Stellung, in welcher das Verkleidungselement 46 etwa horizontal zur Fahrzeugaußenseite hin von dem Außenverkleidungsteil 10 absteht.

In der eingefahrenen ersten Stellung liegt das Verkleidungselement 46 dabei innerhalb einer muldenartigen Vertiefung 48 ein, welche insbesondere in Fig. 4 gut erkennbar ist und welche die beiden äußeren formstabilen Teilelemente 12, 16 miteinander verbindet. Die Vertiefung 48 ist dabei einstückig mit den beiden Teilelementen 12, 16 ausgebildet und besteht demzufolge ebenfalls aus einem formstabilen Material, beispielsweise einem PP- oder PA-Kunststoff. Im Rahmen der Erfindung ist allerdings zu berücksichtigen, dass gegebenenfalls auch auf diese muldenartige Vertiefung 48 verzichtet werden kann. In dem Ausführungsbeispiel erstreckt sich die Vertiefung 48 von einem unteren Ende 50 des oberen formstabilen Teilelements 12 bis zu einem oberen Ende 52 des unteren formstabilen Teilelements 16.

Das mittlere formstabile Teilelement 14 ist unter Vermittlung der jeweiligen elastischen Teilelemente 18, 20 mit dem unteren Ende des oberen formstabilen Teilelements 12 beziehungsweise mit dem oberen Ende des unteren formstabilen Teilelements 16 verbunden. Die jeweiligen Teilelemente 12 bis 20 sowie die Vertiefung 48 sind vorliegend - wie bereits im Zusammenhang mit den ersten beiden Ausführungsbeispielen beschrieben - in einem Zweikomponenten-Spritzgussverfahren hergestellt und fugenlos beziehungsweise einteilig ausgebildet.

Befindet sich nun das um die Schwenkachse S ausklappbare Verkleidungselement 46 in seiner ersten Stellung, welche auch in Fig. 3a erkennbar ist, so wird das formstabile mittlere Teilelement 14 infolge der Kraftbeaufschlagung durch das Verkleidungselement 46 gemäß den in Fig. 5b angedeuteten Pfeilen 54 in Fahrzeugquerrichtung (y-Richtung) nach innen verlagert und kommt zumindest im Wesentlichen in Anlage mit einer Außenseite der Vertiefung 48. Ist diese Vertiefung 48 nicht vorhanden, so wird das formstabile Teilelement 14 in einen freien Zwischenraum 56 zwischen dem Außenverkleidungsteil 10 und dem Seitenschweller 44 beziehungsweise dem Energieabsorptionselement 30 hineinbewegt. Durch das Abklappen des Verkleidungselements 46 in die erste, verkleidungsteilnahe Stellung wird demzufolge das formstabile Teilelement 14 aus seiner Verkleidungsstellung V, in welcher dieses mit seiner Außenseite 58 gemeinsam mit der übrigen Außenseite 22 des Außenverkleidungsteils 10 die von außen sichtbare Außenverkleidung bildet, in eine Muldenstellung M verlagert, in welcher diese in der Vertiefung 48 einliegt beziehungsweise eine Mulde 60 für das Verkleidungselement 46 in seiner ersten, abgeklappten Stellung ausbildet. Einhergehend mit dieser Verlagerung des mittleren, formstabilen Teilelements 14 werden die jeweiligen elastischen Teilelemente 18, 20 durch die Verlagerung des Teilelements 14 und der damit einhergehenden Kraftbeaufschlagung unter Veränderung beziehungsweise Vergrößerung ihrer jeweiligen Verkleidungsfläche gedehnt, so dass sie gemeinsam mit dem Teilelement 14 die Mulde 60, welche das Verkleidungselement 46 in seiner abgeklappten Stellung aufnimmt, bilden. Diese Mulde 60 - gebildet durch das Teilelement 14 sowie die elastischen Teilelemente 18, 20 - liegt im vorliegenden Fall außenseitig in der Vertiefung 48 des Außenverkleidungsteils 10 ein. Gegebenenfalls kann - wie bereits erläutert - diese Vertiefung 48 jedoch auch nicht vorhanden sein.

Es ist also erkennbar, dass sich das formstabile mittlere Teilelement 14 sowie die elastischen Teilelemente 18, 20 im Wesentlichen an eine Rückseite 62 des Verkleidungselements 46 anpassen, wenn dieses in seine erste, eingefahrene Stellung verlagert wird. Dies ist insbesondere aus Fig. 5 durch die entsprechenden Pfeile 54 verdeutlicht.

Wird das Verkleidungselement 46 aus seiner ersten Stellung, in welcher dieses mit seiner Außenseite 64 gemeinsam mit der Außenseite 22 die Außenhaut der Außenverkleidung ausbildet, gemäß Fig. 5A in die ausgeklappte Stellung verlagert, in welcher dieses etwa horizontal zur Fahrzeugaußenseite hin absteht, so wird das formstabile Teilelement 14 gemeinsam mit den elastischen Teilelementen 18, 20 aufgrund der reversiblen, Elastizität dieser beiden Teilelemente 18, 20 gemäß den Pfeilen 66 in ihre ursprüngliche Stellung, nämlich die Verkleidungsstellung, zurückverlagert, in welcher die Teilelemente 14, 18, 20 gemeinsam mit dem Verkleidungsteil 10 die Außenhaut der Außenverkleidung bilden.

Hierbei ist erkennbar, dass sich die elastischen Teilelemente 18, 20 dann in einer zumindest weitestgehend ungedehnten Stellung beziehungsweise Form befinden. Aufgrund der reversiblen Elastizität der Teilelemente 18, 20 kann die Verstellung des Verkleidungselements 46 beliebig oft erfolgen, ohne dass es hierdurch zu Nachteilen hinsichtlich des äußeren Erscheinungsbildes der Außenverkleidung kommt.

Befindet sich das Verkleidungselement 46 in seiner ausgeklappten, etwa horizontalen Stellung, so hat dies - wie bereits im Zusammenhang mit den beiden anderen Ausführungsbeispielen beschrieben - insbesondere aerodynamische Vorteile, da beispielsweise eine vom Bereich der Vorderräder entlang der Außenverkleidung gelangende Luftströmung gezielt abgelöst werden kann, um hierdurch den Strömungswiderstand des Fahrzeugs zu verringern. Gleichzeitig kann durch das Verstellen des Verkleidungselements 46 auch ein Ein- oder Ausstieg eines Fahrzeuginsassen verbessert werden und gegebenenfalls können auch die Unfalleigenschaften des Fahrzeugs bei einem Seitenaufprall verbessert werden.

## Patentansprüche

1. Außenverkleidung für einen Kraftwagen, mit einem Außenverkleidungsteil (10) mit wenigstens einem formstabilen Teilelement (12, 14, 16) und wenigstens einem sich an dieses anschließenden weiteren Teilelement (18, 20), welches beim Verstellen des Außenverkleidungsteils (10) aus einer Stellung (A) in eine weitere Stellung (W) unter Veränderung seiner Verkleidungsfläche (26) verstellbar ist,
wobei das weitere Teilelement (18, 20) aus einem elastischen Werkstoff gebildet ist, und
wobei dessen Verkleidungsfläche (26) unter Kraftbeaufschlagung reversibel veränderbar ist, **dadurch gekennzeichnet, dass** sich auf beiden Seiten eines mittleren, formstabilen Teilelements (14) jeweils ein elastisches weiteres Teilelement (18, 20) anschließt.

2. Außenverkleidung nach Anspruch 1,
**dadurch gekennzeichnet, dass**
das formstabile Teilelement (12, 14, 16) und das elastische Teilelement (18, 20) des Außenverkleidungsteils (10) einstückig miteinander verbunden sind.

3. Außenverkleidung nach Anspruch 2,
**dadurch gekennzeichnet, dass**
das formstabile Teilelement (12, 14, 16) und das elastische Teilelement (18, 20) des Außenverkleidungsteils (10) in einem Zweikomponenten-Spritzgussverfahren hergestellt sind.

4. Außenverkleidung nach einem der vorhergehenden Ansprüche,
**dadurch gekennzeichnet, dass**
die Außenverkleidung ein weiteres, formstabiles Verkleidungselement (46) aufweist, welches zwischen wenigstens zwei Stellungen verstellbar ist, und mittels welchem das Außenverkleidungsteil (10) zwischen der einen Stellung (V) in der weiteren Stellung (M) verstellbar ist.

5. Außenverkleidung nach einem der vorhergehenden Ansprüche,
**dadurch gekennzeichnet, dass**
das Außenverkleidungsteil (10) in seiner einen Stellung (V) die Außenverkleidung des Kraftwagens bildet und in seiner weiteren Stellung (M) eine Mulde (60) ausbildet, in welcher das weitere, formstabile Verkleidungselement (46) in seiner einen Stellung aufgenommen ist, in welcher diesen die Außenverkleidung bildet.

6. Außenverkleidung nach einem der vorhergehenden Ansprüche,
**dadurch gekennzeichnet, dass**
auf der der Außenseite (22) abgewandten Innenseite des Außenverkleidungsteils (10) ein Stellelement (34) vorgesehen ist, mittels welchem das formstabile Verkleidungselement (14) zwischen den wenigstens zwei Stellungen (A, W) verstellbar ist.

7. Außenverkleidung nach Anspruch 6,
**dadurch gekennzeichnet, dass**
auf der Außenseite (22) des Außenverkleidungsteils (10) und im Bereich des Stellelements (34) ein Zierelement (42) angeordnet ist.

8. Außenverkleidung nach einem der vorhergehenden Ansprüche,
**dadurch gekennzeichnet, dass**
die Außerverkleidung als Schwellerlängsverkleidung eines Seitenschwellers (28, 44) des Kraftwagens ausgebildet ist.

## Claims

1. Exterior trim for a motor vehicle, comprising an exterior trim part (10) comprising
at least one dimensionally stable sub-element (12, 14, 16) and at least one further sub-element (18, 20) which is attached to it and can be adjusted from one position (A) to a further position (W) when the exterior trim part (10) is adjusted by changing its trim surface (26),
the further sub-element (18, 20) being made of an elastic material, and
it being possible for its trim surface (26) to be reversibly changed by applying force, **characterized in that**
a further elastic sub-element (18, 20) is attached to the two sides of a central, dimensionally stable sub-element (14).

2. Exterior trim according to claim 1,
**characterized in that**
the dimensionally stable sub-element (12, 14, 16) and the elastic sub-element (18, 20) of the exterior trim part (10) are integrally connected to one another.

3. Exterior trim according to claim 2,
**characterized in that**
the dimensionally stable sub-element (12, 14, 16) and the elastic sub-element (18, 20) of the exterior trim part (10) are produced in a two-component injection molding process.

4. Exterior trim according to any of the preceding claims,
**characterized in that**
the exterior trim has a further dimensionally stable trim element (46) which can be adjusted between at least two positions and by means of which the exterior trim part (10) can be adjusted between one position (V) and the further position (M).

5. Exterior trim according to any of the preceding claims,
**characterized in that**
the exterior trim part (10), in its one position (V), forms the exterior trim of the motor vehicle and, in its further position (M), forms a recess (60) in which the further dimensionally stable trim element (46) is received in its one positions in which it forms the exterior trim.

6. Exterior trim according to any of the preceding claims,
**characterized in that**
an actuating element (34) is provided on the inside of the exterior trim part (10), which element faces away from the outside (22) and by means of which the dimensionally stable skin element (14) can be adjusted between the at least two positions (A, W).

7. Exterior trim according to claim 6,
**characterized in that**
a decorative element (42) is arranged on the outside (22) of the exterior trim part (10) and in the region of the actuating element (34).

8. Exterior trim according to any of the preceding claims,
**characterized in that**
the exterior trim is designed as a longitudinal sill trim of a side sill (28, 44) of the motor vehicle.

## Revendications

1. Revêtement extérieur pour un véhicule automobile, comportant une partie de revêtement extérieur (10) comportant
au moins un élément partiel indéformable (12, 14, 16) et au moins un autre élément partiel (18, 20) se raccordant à celui-ci et qui peut être déplacé lors du déplacement de la partie de revêtement extérieur (10) d'une position (A) à une autre position (W) en modifiant sa surface de revêtement (26), dans lequel
l'autre élément partiel (18, 20) est formé à partir d'un matériau élastique, et dans lequel
sa surface de revêtement (26) peut être modifiée de manière réversible sous l'effet d'une force, **caractérisé en ce**
**que** respectivement un autre élément partiel élastique (18, 20) est relié de part et d'autre à un élément partiel indéformable (14) central.

2. Revêtement extérieur selon la revendication 1,
**caractérisé en ce que**
l'élément partiel indéformable (12, 14, 16) et l'élément partiel élastique (18, 20) de la partie de revêtement extérieur (10) sont reliés entre eux d'un seul tenant.

3. Revêtement extérieur selon la revendication 2,
**caractérisé en ce que**
l'élément partiel indéformable (12, 14, 16) et l'élément partiel élastique (18, 20) de la partie de revêtement extérieur (10) sont fabriqués par un procédé de moulage par injection à deux composants.

4. Revêtement extérieur selon l'une des revendications précédentes,
**caractérisé en ce que**
le revêtement extérieur présente un autre élément de revêtement indéformable (46) pouvant être déplacé entre au moins deux positions, et au moyen duquel la partie de revêtement extérieur (10) peut être déplacée entre la position (V) et l'autre position (M).

5. Revêtement extérieur selon l'une des revendications précédentes,
**caractérisé en ce que**
la partie de revêtement extérieur (10) forme, dans sa position (V), le revêtement extérieur du véhicule automobile et réalise, dans son autre position (M), une cavité (60) dans laquelle est reçu l'autre élément de revêtement indéformable (46) dans sa position dans laquelle celui-ci forme le revêtement extérieur.

6. Revêtement extérieur selon l'une des revendications précédentes,
**caractérisé en ce que**
un élément de réglage (34) est prévu sur le côté intérieur de la partie de revêtement extérieur (10), opposé au côté extérieur (22), élément de réglage au moyen duquel l'élément de revêtement indéformable (14) peut être déplacé entre les au moins deux positions (A, W).

7. Revêtement extérieur selon la revendication 6,
**caractérisé en ce que**
un élément décoratif (42) est disposé sur le côté extérieur (22) de la partie de revêtement extérieur (10) et dans la zone de l'élément de réglage (34).

8. Revêtement extérieur selon l'une des revendications précédentes,
**caractérisé en ce que**
le revêtement extérieur est réalisé sous forme de revêtement longitudinal de bas de caisse d'un bas de caisse latéral (28, 44) du véhicule automobile.
